# EUROPÄISCHE PATENTSCHRIFT

(11) **EP 3 795 469 B1**
(45) Veröffentlichungstag und Bekanntmachung des Hinweises auf die Patenterteilung: **11.03.2026**
(21) Anmeldenummer: 20197156.1
(22) Anmeldetag: 21.09.2020
(51) Int. Cl.: B64U 50/23, B64U 50/14, B64U 50/19, B64U 10/14, B64U 10/16, B64C 27/54

(54) **FLUGGERÄT UND ANTRIEBSEINHEIT**
AIRCRAFT AND DRIVE UNIT
AÉRONEF ET UNITÉ D'ENTRAINEMENT

(30) Priorität: 20.09.2019 DE 102019125460
(43) Veröffentlichungstag der Anmeldung: 24.03.2021
(73) Patentinhaber: KRD Luftfahrttechnik GmbH, 21357 Bardowick (DE)
(72) Erfinder: Trautmann, Marc, 29649 Wietzendorf (DE)
(74) Vertreter: Noack, Andreas

(56) Entgegenhaltungen:
- WO-A1-2016/164280
- WO-A1-2017/172402
- KR-B1- 101 772 570
- US-A1- 2019 161 179
- US-A1- 2019 176 979

## Beschreibung

Die Erfindung betrifft ein Fluggerät, umfassend eine Gondel und wenigstens drei Antriebseinheiten, welche so um die Gondel angeordnet sind, dass sie eine Fläche aufspannen; wobei jede Antriebseinheit wenigstens einen Rotor mit einer Rotationsachse umfasst, die im Wesentlichen senkrecht zu der durch die Antriebseinheiten aufgespannten Fläche verläuft, und wobei jeder Rotor wenigstens zwei, bevorzugt wenigstens drei Rotorblätter aufweist, deren Anstellwinkel α betriebsmäßig in einem vorgegebenen Winkelbereich verstellbar ist.

Gattungsgemäße Fluggeräte sind seit längerem bekannt und werden seit einiger Zeit hauptsächlich im Bereich kleinerer unbemannter Fluggeräte (Drohnen) eingesetzt. Aufgrund der Verwendung mehrerer Rotoren werden solche Fluggeräte zumeist als Multicopter bezeichnet.

Zur Steuerung der Fluglage von Multicoptern wird der durch die einzelnen Antriebseinheiten erzeugte Auftrieb gesteuert, auf diese Weise können Roll- und Nickmomente erzeugt werden. Mittels einer entsprechend erzeugten Verkippung der durch die Antriebseinheiten aufgespannten Ebene ergibt sich aus dem Auftrieb der Antriebseinheiten eine Vortriebskraft, durch welche sich das Fluggerät vorwärts und/oder seitwärts bewegt.

Aus einer Summe der Drehmomente aller Antriebseinheiten des Fluggeräts ergibt sich zusätzlich ein Giermoment. Dies wird bei kleineren Multicoptern zumeist dadurch ausgeglichen, dass eine gerade Anzahl von Antriebseinheiten vorgesehen ist, von denen jeweils die Hälfte im Uhrzeigersinn und die andere Hälfte gegen den Uhrzeigersinn dreht. Durch entsprechende Anpassung der Drehmomente der einzelnen Antriebseinheiten kann gezielt ein Giermoment erzeugt werden, um das Fluggerät auszurichten.

Rotoren von Multicoptern haben üblicherweise zwischen zwei und sechs Rotorblätter mit festem Anstellwinkel. Zur Veränderung des Auftriebs und/oder Drehmoments eines Rotors wird die Drehzahl des Rotors verändert.

Während die Flugsteuerung kleiner Multicopter über die Drehzahl der Antriebseinheiten recht zuverlässig funktioniert, stößt dieses Prinzip bei größeren Fluggeräten an Grenzen. Dies liegt zum einen an einer stark nichtlinearen Abhängigkeit zwischen Drehzahl und Auftrieb, insbesondere bei geringen Drehzahlen, und zum anderen an der mit dem Rotordurchmesser zunehmenden Trägheit der Rotoren.

Bei der Regelung der Fluglage eines Multicopters mit großen Rotoren bewirkt die Rotorträgheit eine verzögerte Anpassung des Auftriebs in Reaktion auf einen Stellbefehl der Steuerung. Dies führt zu einer verstärkten Neigung zu Überschwingungen bei plötzlichen Störeinflüssen wie Böen. Um diesen Einfluss zu reduzieren müssen Antriebsmotoren der Rotoren extrem leistungsstark ausgeführt werden, was zu einem höheren Eigengewicht und damit zu einer geringeren Nutzlast des Fluggeräts führt.

Bei dem vermehrt diskutierten Einsatz von Multicoptern im Personen- und Gütertransport werden weitere Schwächen der Auftriebssteuerung über die Drehzahl der Rotoren deutlich.

So werden entstehen beim Aufnehmen oder Absetzen einer Nutzlast Wartezeiten dadurch, dass die Drehzahl der Rotoren zunächst an die geänderten Lastverhältnisse angepasst werden muss. Soll beispielsweise Fahrgast aus einem im Personentransport eingesetzten Multicopter aussteigen, so nach dem Aufsetzen des Multicopters zunächst die Drehzahl der Rotoren so weit reduziert werden, dass der Multicopter auch nach dem Aussteigen des Fahrgastes mit ausreichend stabil steht, um nicht bei einer plötzlichen Bö gegen den gerade ausgestiegenen Fahrgast gedrückt zu werden und diese zu verletzen. In der Regel wird dazu die Drehzahl so weit reduziert werden müssen, dass die Rotoren keinen Auftrieb mehr erzeugen. Zum Weiterflug des Multicopters muss die Drehzahl wieder erhöht werden.

Ein weiterer Nachteil bekannter Multicopter sind die beschränkten Möglichkeiten, auf einen Ausfall des Antriebs eines Rotors zu reagieren.

Es ist vereinzelt vorgeschlagen worden, Multicopter mit Rotoren mit variablem Anstellwinkel der Rotorblätter auszustatten, um die Fluglageregelung zu verbessern. Die beschriebenen Probleme werden hierdurch jedoch nicht oder nicht vollständig gelöst.

Die WO 2017/172402 A1 offenbart ein Fluggerät mit mehreren Antriebseinheiten in Form von Propellern / Rotoren mit verstellbaren Anstellwinkeln. Die WO 2016/164280A1 offenbart ein Fluggerät in Form eines Multicopters mit drei Hauptrotoren und einem Heckrotor, welches autorotationsfähig ist. Die US 2019/0161179 A1 offenbart ein Fluggerät mit mehreren Rotoren, deren Blätter verstellbare Anstellwinkel aufweisen. Die US 2019/0176979 A1 offenbart ebenfalls ein Fluggerät mit mehreren Rotoren, deren Blätter hin zu negativen Anstellwinkeln verstellbar sind. Die KR 101 772 570 B1 offenbart ein weiteres Fluggerät mit mehreren Rotoren.

Es besteht daher eine Aufgabe der Erfindung darin, ein Fluggerät bereitzustellen, welches hinsichtlich der beschriebenen Problematiken verbessert ist.

Diese Aufgabe wird erfindungsgemäß gelöst durch ein Fluggerät gemäß der anliegenden Ansprüche. Ein solches Fluggerät umfasset eine Gondel und wenigstens drei Antriebseinheiten, welche so um die Gondel angeordnet sind, dass sie eine Fläche aufspannen; wobei jede Antriebseinheit wenigstens einen Rotor mit einer Rotationsachse umfasst, die im Wesentlichen senkrecht zu der durch die Antriebseinheiten aufgespannten Fläche verläuft, und wobei jeder Rotor wenigstens zwei, bevorzugt wenigstens drei Rotorblätter aufweist, deren Anstellwinkel α betriebsmäßig in einem vorgegebenen Winkelbereich verstellbar ist, welches dadurch weitergebildet ist, dass der vorgegebenen Winkelbereich einen Anstellwinkel einschließt, bei welchem ein Rotorblatt unabhängig von einer Drehzahl des Rotors keinen Auftrieb erzeugt.

Der Anstellwinkel eines Rotorblattes, bei dem das Rotorblatt unabhängig von der Drehzahl des Rotors keinen Auftrieb erzeugt, wird üblicherweise als 0° angegeben, diese Einstellung wird auch als Neutralstellung bezeichnet. Dadurch, dass der Anstellwinkel der Rotoren im Betrieb auf 0° eingestellt werden kann, ist es möglich, das Fluggerät bei voller Drehzahl der Rotoren sicher mit seinem ganzen Eigengewicht abzustellen, während beispielsweise ein Fahrgast ein- oder aussteigt, und nach dem Ein- oder Aussteigen durch Verstellung des Anstellwinkels auf einen positiven Wert ohne Einhaltung von Totzeiten sofort wieder abzuheben. Ausgehend von der Neutralstellung wird als Anstellwinkel eines Rotorblattes in der Regel der Winkel angegeben, um welchen das Rotorblatt gegenüber der Neutralstellung verdreht ist.

In einer vorteilhaften Weiterbildung eines Fluggeräts gemäß der Erfindung kann der vorgegebene Winkelbereich Anstellwinkel einschießen, bei welchen ein Rotorblatt negativen Auftrieb erzeugt. Solche Anstellwinkel werden im allgemeinen als negative Winkel (α < 0°) angegeben.

Durch das Vorsehen negativer Anstellwinkel werden Einsatzmöglichkeiten eines erfindungsgemäßen Fluggeräts deutlich erweitert. So kann beispielsweise bei starken Winden das Fluggerät durch die Antriebseinheiten zusätzlich auf den Boden gedrückt werden, um ein sicheres Ein- und Aussteigen zu ermöglichen.

Als weiterer Vorteil erweitert das Vorsehen negativer Anstellwinkel die Reaktionsmöglichkeiten des Fluggeräts bei Ausfall einer Antriebseinheit. Fällt beispielsweise bei einem Fluggerät mit vier Antriebseinheiten, die in Form eines Quadrats angeordnet sind, eine Antriebseinheit aus, so muss der Auftrieb der diametral gegenüber liegenden Antriebseinheit auf Null reduziert werden, um ein Überkippen des Fluggeräts zu verhindern. Die verbleibenden Antriebseinheiten liegen dann jedoch auf einer Linie und eine Steuerung von Rollmomenten ist mit diesen Antriebseinheiten nicht möglich. Die vierte Antriebseinheit kann jedoch zur Steuerung von Rollmomenten genutzt werden, indem der entsprechende Rotor auf Drehzahl gehalten wird und je nach Bedarf durch Einstellung eines positiven oder eines negativen Anstellwinkels das erforderliche Rollmoment erzeugt.

Eine weitere Reaktionsmöglichkeit, die sich durch die möglichen negativen Anstellwinkel ergibt, ist die Autorotation. Ist eine Stabilisierung der Fluglage durch die verbleibenden Antriebseinheiten nicht möglich, so kann in allen Antriebseinheiten ein negativer Anstellwinkel eingestellt und durch die aus der Sinkbewegung resultierende Anströmung der Rotoren deren Drehzahl aufrecht erhalten oder gar erhöht werden. Die so in den Rotoren gespeicherte kinetische Energie kann dann genutzt werden, um das Fluggerät von dem Aufprall abzufangen und kontrolliert zu landen.

In einer bevorzugten Weiterbildung eines Fluggeräts gemäß der Erfindung kann der vorgesehene Winkelbereich Anstellwinkel zwischen -5° und +10° einschließen. Dabei ermöglicht ein Anstellwinkel von -5° die Autorotation, während ein Anstellwinkel von 10° bei üblicher Dimensionierung von Rotorblättern ausreicht, um die volle Nutzlast des Fluggeräts zu tragen.

In einer weiteren bevorzugten Ausführung eines Fluggeräts gemäß der Erfindung kann der vorgesehene Winkelbereich Anstellwinkel zwischen -12° und +12° einschließen. Mit diesem erweiterten Winkelbereich besteht eine weiter verbesserte Manövrierfähigkeit des Fluggeräts.

Die Rotoren der Antriebseinheiten eines Fluggeräts gemäß der Erfindung können einen Radius von wenigsten 1m, bevorzugt von wenigstens 2m aufweisen. Entsprechende Rotorradien ermöglichen wirtschaftlich interessante Nutzlasten, wobei die erfindungsgemäßen Vorteile in der Manövrierfähigkeit besonders zum Tragen kommen.

In einer bevorzugten Ausführung eines Fluggeräts gemäß der Erfindung können die Antriebseinheiten jeweils Mantelring aufweisen. Mantelringe erhöhen zum einen die Betriebssicherheit von erfindungsgemäßen Fluggeräten, indem sie die Gefahr von Kollisionen der Rotorblätter mit Objekten und Personen deutlich reduzieren. Zum anderen unterdrücken Mantelringe Wirbelströmungen an den äußeren Enden der Rotorblätter und erhöhen so die Effizienz der Rotoren.

Die Rotorblätter eines Fluggeräts gemäß einer weiteren Ausführung der Erfindung können eine Schränkung von maximal 5° aufweisen. Als Schränkung wird eine Verdrehung des Querschnittprofils eines Rotorblattes entlang seiner Längsachse bezeichnet. Eine Schränkung von 5° bedeutet dabei, dass sich eine Profilsehne des Querschnittsprofils über die Länge des Rotorblattes um 5° verdreht. Bei geschränkten Rotorblättern kann ein Mittelwert oder ein Medianwert der lokalen Anstellwinkel entlang der Längsachse des Rotorblattes als Anstellwinkel des Rotorblattes verwendet werden.

Durch die Schränkung kann das Profil der Rotorblätter an die unterschiedlichen Umlaufgeschwindigkeiten entlang des Rotorblattes angepasst werden, um eine möglichst gleichförmige Verteilung der Auftriebskraft zu erreichen.

Eine zu starke Schränkung ist bei Rotoren mit verstellbarem Anstellwinkel allerdings nicht sinnvoll, da sich hierdurch einerseits am äußeren bzw. am inneren Ende des Rotorblattes zu große Anstellwinkel ergeben können, welche die Gefahr eines Strömungsabrisses mit sich bringen. Zum anderen entsteht durch die Schränkung im Bereich der Neutralstellung ein Bereich von Anstellwinkeln, in dem das Rotorblatt entlang seiner Längsachse teilweise einen positivem Anstellwinkel und teilweise einen negativen Anstellwinkel aufweist. In diesem Bereich von Anstellwinkeln erzeugt der Rotor praktisch keinen Auftrieb, wird jedoch stark gebremst.

In einer weiteren vorteilhaften Ausführung eines Fluggeräts gemäß der Erfindung kann jede Antriebseinheit zwei koaxiale Rotoren mit gegenläufiger Drehrichtung aufweisen. Durch entlang der Rotationsachse dicht übereinander liegende Rotoren kann die pro Rotorfläche erreichbare Auftriebskraft erhöht werden. Gleichzeitig kompensieren sich die Drehmomente der beiden Rotoren zu einem großen Teil, so dass die Steuerung eines auf das Fluggerät wirkenden Giermoments vereinfacht.

Die Drehzahl und der Anstellwinkel der Rotorblätter können bei einem Fluggerät gemäß der Erfindung vorzugsweise für jede Antriebseinheit separat steuerbar sein. Dadurch kann das Flugverhalten des Fluggeräts besonders flexibel gesteuert werden. Vorzugsweise sind bei Antriebseinheiten mit zwei koaxialen Rotoren die Drehzahl und/oder der Anstellwinkel der Rotorblätter beider Rotoren unabhängig voneinander steuerbar.

Das Fluggeräts gemäß der Erfindung ist modular aufgebaut, wobei jede Antriebseinheit als eigenständiges Antriebsmodul aufgebaut ist, welches folgendes umfasst: wenigstens einen Antriebsmotor für den wenigstens einen Rotor, wenigstens einen Stellmotor für die Einstellung des Anstellwinkels der Rotorblätter, eine Modulsteuerung für den wenigstens einen Antriebsmotor und/oder den wenigstens einen Stellmotor, und eine Datenschnittstelle für eine Kommunikation zwischen der Modulsteuerung und einer Zentralsteuerung und/oder weiteren Modulsteuerungen.

Auf diese Weise können standardisierte Antriebsmodule bereitgestellt werden, die jeweils für eine bestimmte Nenntragkraft ausgelegt sind. Beispielsweise kann ein Antriebsmodul mit einem einfachen Rotor mit 1m Rotorradius eine Tragkraft (Auftriebskraft abzgl. Eigengewichtskraft) von z.B. 200N aufweisen, während ein Antriebsmodul mit zwei koaxialen Rotoren mit 2m Rotorradius eine Tragkraft von 1000N aufweisen kann. Je nach Anforderungen können dann mehrere solcher standardisierter Antriebsmodule mit einer geeigneten Gondel zu einem Fluggerät kombiniert werden.

Jedes Antriebsmodul weist eine Modulsteuerung auf, welche die Drehzahl der Rotoren der Antriebseinheit und die Anstellwinkel der Rotorblätter steuert. Dazu ist vorzugsweise für jeden Rotor der Antriebseinheit ein eigener Antriebsmotor und ein eigener Stellmotor für die Anstellwinkel vorgesehen. Die Modulsteuerung weist eine Datenschnittstelle auf, um Betriebsdaten mit einer Zentralsteuerung auszutauschen. Die Zentralsteuerung ist mit Sensoren zur Ermittlung der aktuellen Fluglage und Position des Fluggeräts ausgestattet und eingerichtet, aus den aktuellen ermittelten Daten Sollwerte für Auftrieb und ggf. Drehmoment der einzelnen Antriebsmodule zu ermitteln. Die Modulsteuerungen empfangen die Sollwerte über ihre jeweilige Datenschnittstelle, berechnen daraus die benötigten Drehzahlen und die benötigten Anstellwinkel der Rotorblätter für die Rotoren des Antriebsmoduls, und steuern die Antriebs- und Stellmotoren des Antriebsmoduls entsprechend.

Die Zentralsteuerung kann in der Gondel installiert sein.

Die Erfindung wird nachfolgend anhand einiger beispielhafter Figuren näher erläutert, wobei die in den Figuren dargestellten Ausführungseispiele lediglich zum besseren Verständnis der Erfindung beitragen sollen, ohne diese einzuschränken.

Es zeigen:
Fig. 1: ein Fluggerät in einer Draufsicht,
Fig. 2a-c: das Fluggerät der Figur 1 in einer Frontansicht in verschiedenen Fluglagen,
Fig. 3: ein weiteres Fluggerät,
Fig. 4: eine Antriebseinheit in einer Draufsicht,
Fig. 5: eine Antriebseinheit in einer Schnittdarstellung,
Fig. 6a-e: das Profil eines Rotorblattes,
Fig. 7: ein Antriebsmodul in einer schematischen Darstellung,
Fig. 8: ein modular aufgebautes Fluggerät in einer schematischen Darstellung.

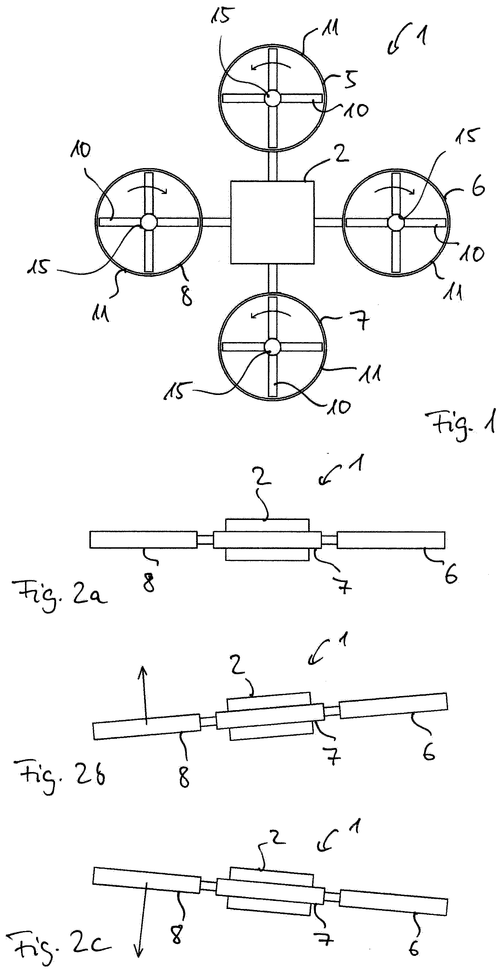

In Figur 1 ist ein Fluggerät 1 in einer Draufsicht dargestellt. Das Fluggerät 1 umfasst eine Gondel 2 und im dargestellten Beispiel vier Antriebseinheiten 5, 6, 7, 8. Die Gondel 2 kann eine Fahrgastzelle, einen Frachtgreifer, und/oder ähnliche Vorrichtungen umfassen, die hier nicht im Detail dargestellt sind.

Die Antriebseinheiten 5, 6, 7, 8 sind in einer Ebene, hier der Zeichenebene, angeordnet. Anstelle der vier Antriebseinheiten 5, 6, 7, 8 kann eine andere Anzahl von Antriebseinheiten vorgesehen sein. Dabei werden für eine stabile Fluglage des Fluggeräts 1 wenigstens drei Antriebseinheiten benötigt.

Jede der Antriebseinheiten 5, 6, 7, 8 umfasst einen Rotor mit mehreren Rotorblättern 10. Während im dargestellten Beispiel jeder Rotor vier Rotorblätter 10 aufweist, kann die Anzahl der Rotorblätter größer oder kleiner sein. Obwohl Rotoren mit nur einem Rotorblatt technisch möglich sind, werden in der Regel wenigstens zwei, bevorzugt wenigstens drei Rotorblätter 10 für jeden Rotor vorgesehen sein. Aus strömungsdynamischen Gründen sind mehr als sechs Rotorblätter 10 für einen Rotor in der Regel nicht sinnvoll. Die Drehachsen der Rotoren stehen im Wesentlichen senkrecht zu einer durch die Antriebseinheiten 5, 6, 7, 8 aufgespannten Ebene.

Die Antriebseinheiten 5, 6, 7, 8 erzeugen Auftrieb, um das Fluggerät 1 in der Luft zu halten. Durch Variation der durch die jeweiligen Antriebseinheiten 5, 6, 7, 8 erzeugten Auftriebskräfte lassen sich Nick- und Rollmomente erzeugen, um die Fluglage des Fluggeräts 1 zu steuern.

Jeder der Rotoren erzeugt zusätzlich ein Drehmoment, wobei sich die Drehmomente aller Rotoren zu einem auf das Fluggerät 1 wirkenden Giermoment addieren. Dabei rotieren die Rotoren der Antriebseinheiten 5 und 7 entgegengesetzt zu den Rotoren der Antriebseinheiten 6 und 8, so dass sich die jeweiligen Drehmomente bei gleichen Betriebsbedingungen aller Rotoren kompensieren.

Die Rotoren der Antriebseinheiten 5, 6, 7, 8, sind jeweils von Mantelringen 11 umgeben. Die Mantelringe 11 dienen einerseits zum Schutz der Rotorblätter 10 vor Kollisionen mit Hindernissen und andererseits zum Unterdrücken von Wirbelströmungen an den äußeren Enden der Rotorblätter 10.

Die Rotoren der Antriebseinheiten 5, 6, 7, 8 werden durch nicht dargestellte Elektromotoren angetrieben, die in Naben 15 der Rotoren angeordnet sind.

Über die Drehzahl der Rotoren kann die durch die jeweiligen Antriebseinheiten 5, 6, 7, 8 bereitgestellte Auftriebskraft eingestellt werden. Dazu werden die jeweiligen Antriebsmotoren so gesteuert, dass sie die Rotoren mit einer gewünschten Drehzahl antreiben. Allerdings weisen insbesondere Rotoren mit großen Radien erhebliche Trägheitsmomente auf, was dazu führt, dass die Drehzahl dieser Rotoren nur langsam verstellt werden kann.

Für eine schnelle Veränderung der durch eine der Antriebseinheiten 5, 6,7, 8 bereitgestellte Auftriebskraft, wie sie insbesondere für die Fluglageregelung erforderlich sein kann, können die Rotorblätter 10 zusätzlich im Anstellwinkel verstellt werden. Hierzu umfasst jeder der Rotoren einen Stellmotor.

Für die technische Umsetzung der Verstellung der Anstellwinkel der Rotorblätter 10 stehen dem Fachmann verschiedene Lösungen zur Verfügung, die hier nicht im Detail beschrieben werden sollen. Dabei ist in der Regel eine von der Drehwinkelstellung der Rotorblätter 10 unabhängige Einstellung des Anstellwinkels ausreichend, so dass auf eine aus dem Hubschrauberbereich bekannte Taumelscheibe verzichtet werden kann. In besonderen Einzelfällen kann jedoch auch eine drehwinkelabhängige Verstellung erforderlich sein, wobei auf die oben genannte Technologie mit Taumelscheibe zurückgegriffen werden kann.

Der Anstellwinkel der Rotorblätter 10 ist in einem Winkelbereich verstellbar, der einen Anstellwinkel einschließt, bei welchem die Rotorblätter 10 unabhängig von Ihrer Drehzahl keinen Auftrieb mehr erzeugen. Dieser Anstellwinkel wird auch als Neutralstellung genannt und in der Regel mit einem Anstellwinkel α=0° bezeichnet.

Die Möglichkeit, die Rotorblätter in Neutralstellung zu bringen, bietet erhebliche Vorteile bei Be- und Entladungsvorgängen des Fluggeräts 1. Soll z.B. das Fluggerät einen Passagier befördern, so muss das Fluggerät 1 während des Ein- und Aussteigens des Passagiers sicher auf dem Boden stehen. Dazu dürfen die Antriebseinheiten 5, 6, 7, 8 keinen oder nur sehr wenig Auftriebskraft erzeugen, da andernfalls das Fluggerät 1 nur wenig Bodenhaftung aufweist und durch seitliche Böen leicht bewegt werden kann. Hierbei besteht dann eine erhebliche Unfallgefahr.

Herkömmliche Fluggeräte reduzieren dazu die Drehzahl der Rotoren auf null. Dies hat jedoch zur Folge, dass nach dem Einsteigen des Passagiers zunächst die Rotoren beschleunigt werden müssen, was bei Rotoren mit großem Radius wegen der hohen Trägheitsmomente einige Zeit in Anspruch nehmen kann. Während dies in den meisten zivilen Anwendungsfällen bestenfalls ärgerlich ist, kann diese Wartezeit bei Rettungseinsätzen oder bei Einsätzen im militärischen Bereich eine verheerende Wirkung haben.

Im Gegensatz dazu kann das Fluggerät 1 die Drehzahl der Rotoren unverändert lassen und lediglich die Rotorblätter 10 in Neutralstellung bringen, so dass die Antriebseinheiten 5, 6, 7, 8 keinen Auftrieb erzeugen. Dadurch steht das Fluggerät 1 genau so sicher auf dem Boden wie ein Fluggerät mit angehaltenen Rotoren. Um nach dem Ein- oder Aussteigen der Passagiere zu starten, müssen lediglich die Rotorblätter 10 so verstellt werden, dass sie den benötigten Auftrieb erzeugen. Diese Verstellung ist praktisch Verzögerungsfrei möglich.

Ähnliche Vorteile lassen sich durch die Neutralstellung der Rotorblätter 10 bei Be- und Entladevorgängen im Gütertransport erreichen. Soll das Fluggerät 1 beispielsweise eine Nutzlast, z.B. einen Container absetzen, so kann eine Verbindung zwischen der Nutzlast und der Gondel 2 des Fluggeräts 1 erst dann gelöst werden, wenn die Auftriebskraft der Antriebseinheiten 5, 6, 7, 8 praktisch auf null reduziert ist. Andernfalls würde das Fluggerät 1 nach dem Lösen der Verbindung durch die Auftriebskraft der Antriebseinheiten 5, 6, 7, 8, in die Höhe gerissen, was wiederum zu Unfällen führen könnte.

Weiterhin ist die Rotorblattverstellung der Antriebseinheiten 5, 6, 7, 8 so ausgeführt, dass der Anstellwinkel der Rotorblätter 10 über die Neutralstellung hinaus zu Anstellwinkeln verstellt werden kann, bei denen die Rotorblätter eine negative Auftriebskraft, also eine Abtriebskraft erzeugen. Entsprechende Anstellwinkel werden als negative Anstellwinkel α<0° bezeichnet.

Durch Einstellen von negativen Anstellwinkeln kann das Fluggerät 1 bei Be- und Entladevorgängen mit der zusätzlichen Abtriebskraft der Antriebseinheiten 5, 6, 7, 8 fest auf den Boden gedrückt werden, was die Stabilität des Fluggeräts z.B. bei seitlichen Böen weiter erhöht.

Die Möglichkeit, neutrale und sogar negative Anstellwinkel der Rotorblätter 10 einzustellen, bietet auch zusätzliche Reaktionsmöglichkeiten bei Betriebsstörungen einer der Antriebseinheiten 5, 6, 7, 8, wie im Folgenden anhand der Figuren 2a bis 2c erläutert wird.

In Figur 2a ist das Fluggerät 1 in einer Frontansicht dargestellt, wobei nur die Gondel 2 sowie die Antriebseinheiten 6, 7, 8 erkennbar sind. Wenn nun eine der Antriebseinheiten, im dargestellten Fall die Antriebseinheit 6, ausfällt, so wird die Fluglage des Fluggeräts 1 instabil, da die gegenüberliegende Antriebseinheit 8 nun ein starkes Rollmoment erzeugt, während die entlang einer Längsachse des Fluggeräts 1 angeordneten Antriebseinheiten 5, 7 die tragende Auftriebskraft liefern.

Bei Fluggeräten nach dem Stand der Technik müsste der Rotor der Antriebseinheit 8 gestoppt werden, um das Rollmoment zu beseitigen. Allerdings kann das Fluggerät dann auf externe Rollmomente, z.B. durch Seitenwind, nicht mehr reagieren.

Bei dem vorliegenden Fluggerät 1 können hingegen die Rotorblätter 10 der Antriebseinheit 8 in die Neutralstellung gebracht werden, so dass die Antriebseinheit 8 keine Auftriebskraft und somit auch kein Rollmoment erzeugt.

Führt hingegen das Fluggerät 1 aufgrund äußerer Einflüsse eine Rollbewegung aus, wie es in den Figuren 2b, 2c angedeutet ist, so kann durch Verstellen der Rotorblätter 10 der Antriebseinheit 8 schnell ein entgegenwirkendes Rollmoment erzeugt werden. Hierzu kann die Antriebseinheit 8 entweder eine Auftriebskraft (Fig. 2b) oder eine Abtriebskraft (Fig. 2c) erzeugen.

Ein weiterer Vorteil besteht hier darin, dass die Antriebseinheit 8 auch bei Neutralstellung der Rotorblätter 10 ein Drehmoment erzeugt, welches den Drehmomenten der Antriebseinheiten 5 und 7 entgegenwirkt und somit ein auf das Fluggerät 1 wirkendes Giermoment reduziert. Gleichwohl wird sich ein Gieren des Fluggeräts 1 bei Ausfall einer der Antriebseinheiten 5, 6, 7, 8 nicht immer ganz vermeiden lassen.

Reicht bei Ausfall einer oder mehrerer der Antriebseinheiten 5, 6, 7, 8 die durch die verbleibenden Antriebseinheiten erreichbare Auftriebskraft nicht aus, um das Fluggerät 1 zu tragen, so kommt als weitere Maßnahme die sogenannte Autorotation in Frage, bei welcher alle Antriebseinheiten 5, 6, 7, 8 deaktiviert und die Rotorblätter aller Antriebseinheiten 5, 6, 7, 8 in einen negativen Anstellwinkel gebracht werden. Die Rotoren werden bei dem dann einsetzenden Sinkflug von der durch die Rotorebenen strömende Luft angetrieben. Kurz vor dem Aufsetzen wird dann wieder ein positiver Anstellwinkel eingestellt, um das Fluggerät 1 abzufangen und sanft aufzusetzen. Während des Sinkfluges kann durch unterschiedliche Anstellwinkel an den einzelnen Antriebseinheiten 5, 6, 7, 8 weiterhin in gewissen Grenzen eine Fluglageregelung erfolgen.

Eine Autorotation kann nur durchgeführt werden, wenn bei allen Antriebseinheiten 5, 6, 7, 8 die Verstellung der Rotorblätter 10 funktioniert. Um auch bei Ausfall der Rotorblattverstellung einen Absturz zu vermeiden kann das Fluggerät 1 mit einem nicht dargestellten passiven Rettungssystem ausgestattet sein, beispielsweise mit einem Rettungsfallschirm.

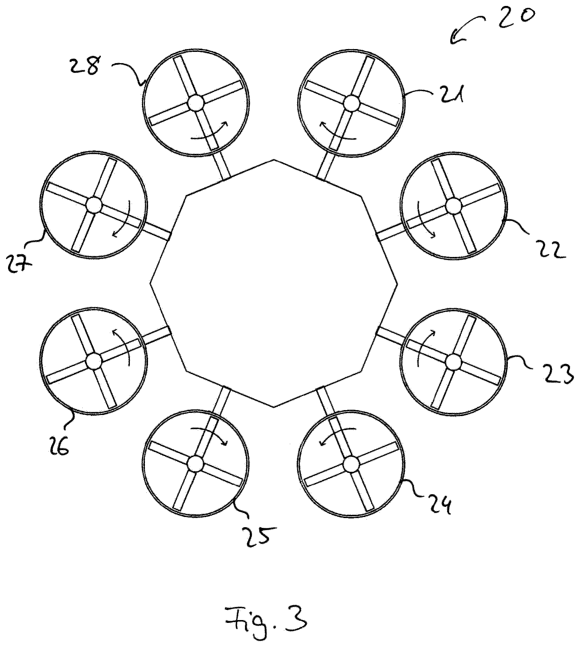

In Figur 3 ist ein weiteres Fluggerät 20 dargestellt. Anders als das Fluggerät 1 der Figuren 1 und 2 ist das Fluggerät 20 mit acht Antriebseinheiten 21, 22, 23, 24, 25, 26, 27, 28 ausgestattet.

Durch die größere Anzahl an Antriebseinheiten kann das Fluggerät 20 größere Lasten transportieren als das Fluggerät 1. Die Funktionsweise der Antriebseinheiten 21, 22, 23, 24, 25, 26, 27, 27 und die Manövriermöglichkeiten bei Fehlfunktion einzelnen Antriebseinheiten entsprechen dabei den Ausführungen zum Fluggerät 1. Natürlich kann das Fluggerät 20 insgesamt den Ausfall einer oder gar mehrerer Antriebseinheiten besser kompensieren als das Fluggerät 1.

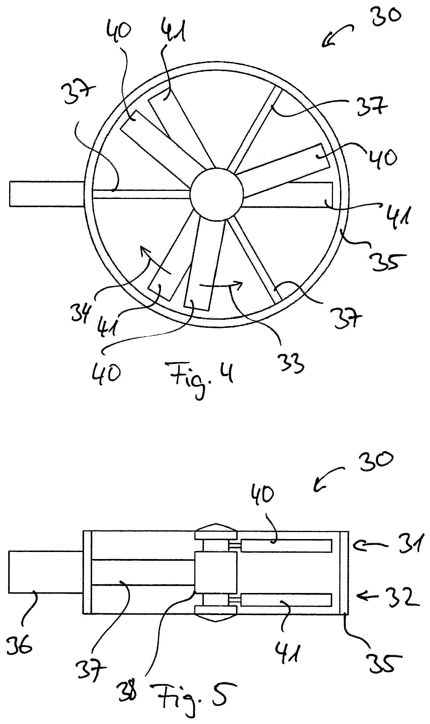

In den Figuren 4 und 5 ist eine weitere Antriebseinheit 30 für ein Fluggerät dargestellt. Anders als die zuvor erläuterten Antriebseinheiten weist die Antriebseinheit 30 zwei Rotoren 31, 32 auf, welche im Betrieb gegenläufig rotieren. Dies ist durch die Pfeile 33, 34 in Figur 4 dargestellt.

Die Antriebseinheit 30 umfasst ebenso wie die zuvor erläuterten Antriebseinheiten einen Mantelring 35, welcher über einen Träger 36 mit der Gondel eines nicht dargestellten Fluggeräts verbunden werden kann.

Innerhalb des Mantelrings 25 ist über drei Tragstreben 37 eine Nabeneinheit 38 aufgehängt. In der Nabeneinheit 38 sind nicht dargestellte Antriebsmotoren für die Rotoren 31, 32 angeordnet.

Der obere Rotor 31 umfasst drei Rotorblätter 40, der untere Rotor 32 umfasst drei Rotorblätter 41. Alternative kann jeder der Rotoren 31, 32 eine andere Anzahl von Rotorblättern aufweisen, bevorzugt jedoch mindestens zwei und höchstens sechs. Dabei kann die Anzahl der Rotorblätter der beiden Rotoren 31, 32 gleich oder unterschiedlich sein.

Die Rotorblätter 40, 41 sind wiederum im Anstellwinkel verstellbar. Stellmotoren für die Verstellung der Anstellwinkel der Rotorblätter 40, 41 können ebenfalls in der Nabeneinheit 38 angeordnet sein und sind hier nicht dargestellt.

Die Antriebseinheit 30 kann aufgrund der zwei Rotoren 31, 32 eine höhere Auftriebskraft erzeugen als die zuvor dargestellten Antriebseinheiten mit lediglich einem Rotor. Ein zusätzlicher Vorteil besteht darin, dass die Drehmomente der Rotoren 31, 32 sich zu einem großen Teil gegenseitig kompensieren können, so dass die Antriebseinheit 30 standardmäßig kein oder nur ein sehr geringes Giermoment erzeugt.

Die Rotoren 31, 32 sind unabhängig voneinander hinsichtlich Drehzahl und dem Anstellwinkel der Rotorblätter 40, 41 steuerbar. Dadurch lassen sich die Auftriebskraft (oder die Abtriebskraft) und das resultierende Drehmoment der Antriebseinheit 30 in weiten Bereichen steuern, gleichzeitig können Drehzahl und Anstellwinkel der Rotoren 31, 32 so aufeinander abgestimmt werden, dass die Luftströmung durch die Antriebseinheit 30 optimiert wird.

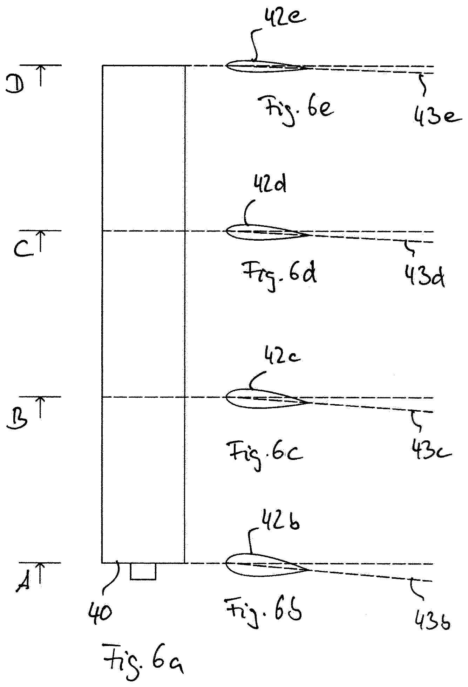

In den Figuren 6a bis 6e ist ein mögliches Profil eines Rotorblattes dargestellt, beispielsweise eines Rotorblattes 40.

Die Figur 6a zeigt dabei das Rotorblatt 40 in einer Draufsicht, während die Figuren 6b bis 6e Querschnittsprofile des Rotorblattes 40 in den Ebenen A, B, C, D darstellt.

Es ist erkennbar, dass das Querschnittsprofil 42b des Rotorblattes 40 in der Ebene A am nabenseitigen Ende des Rotorblattes 40 stark gewölbt ist, und dass die Profilwölbung 42c, 42d, 42e in den Ebenen B, C und D in Richtung zum äußeren Ende des Rotorblattes 40 abnimmt. Diese Änderung des Profils trägt der Tatsache Rechnung, dass die Umlaufgeschwindigkeit des Rotorblattes 40 nach außen hin zunimmt.

Weiterhin ist erkennbar, dass eine Profilsehne 43b des Profils in der Ebene A stärker gegenüber einer Umlaufebene des Rotorblattes 40 geneigt ist, als die Profilsehnen 43c, 43d, 43e in den Ebenen B, C und D. Im dargestellten Beispiel beträgt die Profilneigung in der Ebene A etwa 5°, in der Ebene B etwa 4°, in der Ebene C etwa 3° und in der Ebene D noch etwa 2°. Dementsprechend weist das Rotorblatt 40 eine Schränkung von etwa 3° auf. Durch die Schränkung wird ebenfalls der nach außen hin zunehmenden Umlaufgeschwindigkeit des Rotorblattes 40 Rechnung getragen.

Das Rotorblatt 40 weist in der in Figur 6a bis 6e dargestellten Einstellung einen Anstellwinkel zwischen 5° und 2° auf, wobei ein mittlerer Anstellwinkel über die gesamte Länge des Rotorblattes 40 etwa 3,5° beträgt. In dieser Einstellung erzeugt das Rotorblatt 40 eine Auftriebskraft, die von der Drehzahl des Rotors abhängt. Zur Erhöhung der Auftriebskraft kann der Anstellwinkel des Rotorblatts 40 verstellt werden, beispielsweise bis zu einem mittleren Anstellwinkel von 12°. Hierbei beträgt dann der Anstellwinkel in der Ebene A 13,5°, in der Ebene B 12,5°, in der Ebene C 11,5°, und in der Ebene D noch 10,5°.

Soll das Rotorblatt 40 keinen Auftrieb erzeugen, so kann der mittlere Anstellwinkel auf 0° gestellt werden, wobei in den Ebenen A und B ein positiver Anstellwinkel von 1,5° bzw. 0,5° vorliegt, während in den Ebenen C und D ein negativer Anstellwinkel von -0,5° bzw. -1,5° vorliegt. Die entgegengesetzten Anstellwinkel entlang des Rotorblattes 40 sorgen einerseits dafür, dass sich die resultierenden Auf- und Abtriebskräfte größtenteils aufheben. Anderseits wirkt auf das Rotorblatt 40 in dieser Einstellung weiterhin eine nennenswerte Bremskraft, so dass der Rotor weiterhin ein Drehmoment erzeugt, welches zur Steuerung eines Giermoments des Fluggeräts genutzt werden kann.

Um eine Abtriebskraft zu erzeugen wird der Anstellwinkel so weit verstellt, dass über die gesamte Länge des Rotorblattes 40 ein negativer Anstellwinkel vorliegt. Bei einem mittleren Anstellwinkel von -2° beträgt z.B. der Anstellwinkel in der Ebene A -0,5°, in der Ebene B -1,5°, in der Ebene C -2,5°, und in der Ebene D -3,5°. Es zeigt sich, dass durch die Schränkung des Rotorblattes 40 jetzt der Betrag des Anstellwinkels am äußeren Ende des Rotorblattes größer ist als am inneren Ende. Das hat zur Folge, dass die Effizienz des Rotorblattes 40 bei negativen Anstellwinkeln durch die ungünstige Verteilung der Kräfte entlang des Rotorblattes reduziert ist. Dies kann aber angesichts der durch die oben beschriebenen Vorteile in Kauf genommen werden.

In den Figuren 6a bis 6e weist das Rotorblatt 40 ein symmetrisches Profil auf, d.h. das Profil oberhalb der Profilsehne und das Profil unterhalb der Profilsehne sind spiegelsymmetrisch zueinander. Abweichend davon kann das Rotorblatt auch ein unsymmetrisches Profil aufweisen. Ein Rotorblatt mit unsymmetrischem Profil kann schon Auftrieb erzeugen, wenn die Profilsehne parallel zur Rotationsachse des Rotors verläuft. Entsprechend verläuft die Profilsehne eines Rotorblattes mit unsymmetrischem Profil in dessen Neutralstellung in einem Winkel zur Rotationsachse des Rotors.

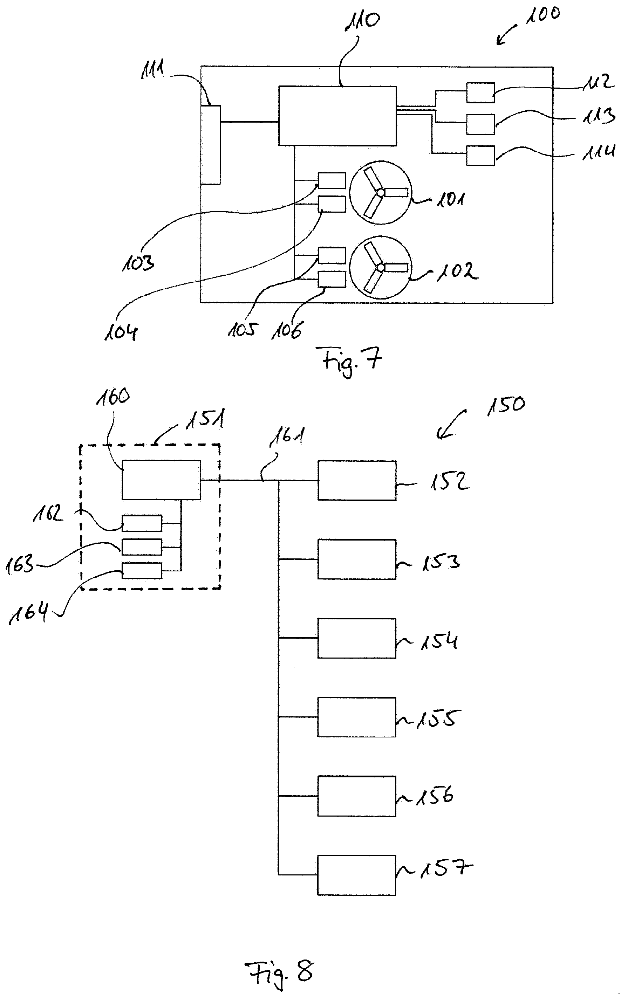

In Figur 7 ist ein Antriebsmodul 100 dargestellt, welches zum modularen Aufbau eines Fluggeräts genutzt werden kann.

Das Antriebsmodul umfasst im dargestellten Beispiel zwei Rotoren 101, 102. Der Rotor 101 wird durch einen Antriebsmotor 103 angetrieben, die Anstellwinkel der Rotorblätter des Rotors 101 erfolgt über einen Stellmotor 104. Entsprechend sind ein Antriebsmotor 105 und ein Stellmotor 106 für den Rotor 102 vorgesehen.

Eine Modulsteuerung 110 steuert die Motoren 103, 104, 105, 106 in Abhängigkeit von Sollwerten für den durch das Antriebsmodul 100 zu liefernden Auftrieb und ein ggf. durch das Antriebsmodul zu lieferndes Drehmoment. Die entsprechenden Sollwerte erhält die Modulsteuerung 110 über eine Datenschnittstelle 111 von einer Zentralsteuerung, die in Figur 7 nicht dargestellt ist.

Zusätzlich kann das Antriebsmodul 100 Sensoren für die Fluglage aufweisen, dies können z.B. ein Positionssensor 112, beispielsweise ein GPS-Sensor, ein Höhenmesser 113, und ein Neigungssensor 114 sein. Die Messwerte der Sensoren 112, 113, 114 können von der Modulsteuerung 110 über die Datenschnittstelle 111 an die Zentralsteuerung übermittelt werden. Weiterhin kann die Modulsteuerung 110 Betriebsdaten über die Datenschnittstelle 111 an die Zentralsteuerung übertragen.

In Figur 8 ist ein modular aufgebautes Fluggerät 150 schematisch dargestellt. Das Fluggerät 150 umfasst eine Gondel 151, die mit sechs Antriebsmodulen 152, 153, 154, 155, 156, 157 verbunden ist. Dabei sind die Antriebsmodule 152, 153, 154, 155, 156, 157 wie das Antriebsmodul 100 ausgeführt und werden hier nicht erneut beschrieben.

Eine mechanische Verbindung der Antriebsmodule 152, 153, 154, 155, 156, 157 mit der Gondel 151 ist nicht dargestellt, sie kann über standardisierte mechanische Verbindungselemente erfolgen. In der Gondel 151 ist eine Zentralsteuerung 160 vorgesehen, welche über eine Datenverbindung 161 mit den Antriebsmodulen 152, 153, 154, 155, 156, 157 verbunden ist. Bei der Datenverbindung 161 kann es sich um ein bekanntes Bussystem handeln, wie beispielsweise einen CAN-Bus oder einen Field-Bus.

Die Zentralsteuerung 160 ist weiterhin mit Fluglagesensoren 162, 163, 164 verbunden, bei denen es sich wie oben zu Figur 7 beschrieben um Positionssensoren, Höhensensoren und Neigungssensoren handeln kann.

Die Zentralsteuerung kann aus den Daten der Fluglagesensoren 162, 163, 164 und vorgegebenen Kursparametern Sollwerte für die durch die Antriebsmodule 152, 153, 154, 155, 156, 157 zu liefernden Auftriebskräfte und Drehmomente ermitteln, und überträgt diese über die Datenleitung 161 an die entsprechenden Antriebsmodule 152, 153, 154, 155, 156, 157. Dazu muss die Zentralsteuerung 160 lediglich wissen, wie viele Antriebsmodule mit der Gondel 151 verbunden sind, und an welchen Stellen diese montiert sind. Hingegen benötigt die Zentralsteuerung 160 keine detaillierten Informationen über den Aufbau der einzelnen Antriebsmodule 152, 153, 154, 155, 156, 157, wie z.B. Anzahl der Rotoren und/oder Kennlinienfelder der Rotorblätter hinsichtlich Drehzahl, Anstellwinkel und Auftriebskraft. Solche Daten sind in den Modulsteuerungen der Antriebsmodule 152, 153, 154, 155, 156, 157 hinterlegt.

Die Antriebsmodule 152, 153, 154, 155, 156, 157 werden dabei mit bestimmten standardisierten Kennwerten bereitgehalten und können bei Bedarf entsprechend zusammengestellt werden. Beispielsweise können Antriebsmodule mit Rotorradien von 1m, 2m und 3m vorgehalten werden, und wahlweise mit jeweils einem oder zwei Rotoren pro Modul.

Durch den entsprechenden modularen Aufbau kann für eine bestimmte Transportaufgabe schnell ein angepasstes Fluggerät 150 zusammengestellt werden, indem anhand der insgesamt benötigten Auftriebskraft Art und Anzahl der Antriebsmodule festgelegt wird. Eine aufwendige individuelle Dimensionierung der Antriebseinheiten sowie eine entsprechende Parameterisierung der Steuerung des Fluggeräts 150 können dadurch wesentlich vereinfacht werden oder gar ganz entfallen.

Das hier beschriebene Steuerungskonzept für ein modular aufgebautes Fluggerät ist lediglich als Beispiel zu verstehen, alternative Steuerungskonzepte können ebenfalls Anwendung finden.

Die Energieversorgung der Antriebsmodule 100, 152, 153, 154, 155, 156, 157 ist nicht dargestellt. Sie kann entweder aus einer zentralen Energieversorgungseinheit erfolgen, oder jedes Modul 100, 152, 153, 154, 155, 156, 157 kann eine eigene Energieversorgung aufweisen. Als Energieversorgungseinheit kommen beispielsweise Batterien bzw. Akkumulatoren in Betracht.

## Patentansprüche

1. Fluggerät, umfassend eine Gondel (2, 151), wenigstens drei Antriebseinheiten (5, 6, 7, 8, 21, 22, 23, 24, 25, 26, 27, 28, 30), welche so um die Gondel (2) angeordnet sind, dass sie eine Fläche aufspannen, und eine Zentralsteuerung (160); wobei jede Antriebseinheit (5, 6, 7, 8, 21, 22, 23, 24, 25, 26, 27, 28, 30) wenigstens einen Rotor (31, 32, 101, 102) mit einer Rotationsachse umfasst, die im Wesentlichen senkrecht zu der durch die Antriebseinheiten (5, 6, 7, 8, 21, 22, 23, 24, 25, 26, 27, 28, 30) aufgespannten Fläche verläuft, und wobei
jeder Rotor (31, 32, 101, 102) wenigstens zwei, bevorzugt wenigstens drei Rotorblätter (10, 40, 41) aufweist, deren Anstellwinkel α betriebsmäßig in einem vorgegebenen Winkelbereich verstellbar ist,
wobei der vorgegebene Winkelbereich einen Anstellwinkel einschließt, bei welchem ein Rotorblatt (10, 40, 41) unabhängig von einer Drehzahl des Rotors (31, 32, 101, 102) keinen Auftrieb erzeugt (α = 0°); und
wobei jede Antriebseinheit als eigenständiges Antriebsmodul (100, 152, 153, 154, 155, 156, 157) aufgebaut ist, welches folgendes umfasst:
- wenigstens einen Antriebsmotor (103, 105) für den wenigstens einen Rotor (31, 32, 101, 102),
- wenigstens einen Stellmotor (104, 106) für die Einstellung des Anstellwinkels der Rotorblätter (10, 40, 41),
- eine Modulsteuerung (110) für den wenigstens einen Antriebsmotor (103, 105) und den wenigstens einen Stellmotor (104, 106), und
- eine Datenschnittstelle (111) für eine Kommunikation zwischen der Modulsteuerung (110) und der Zentralsteuerung (160);
**dadurch gekennzeichnet, dass** die Zentralsteuerung eingerichtet ist, aus vorgegebenen Kursparametern und Daten von Fluglagesensoren (112, 113, 114, 162, 163, 164) Sollwerte für die durch die Antriebsmodule (100, 152, 153, 154, 155, 156, 157) zu liefernden Auftriebskräfte und Drehmomente zu ermitteln und an die Antriebsmodule (100, 152, 153, 154, 155, 156, 157) über die Datenschnittstelle zu übermitteln, und
wobei die Modulsteuerung (110) eingerichtet ist, die Antriebsmotoren (103, 105) und die Stellmotoren (104, 106) in Abhängigkeit der Sollwerte für die durch das Antriebsmodul (100, 152, 153, 154, 155, 156, 157) zu liefernden Auftriebskräfte und Drehmomente zu steuern.

2. Fluggerät nach Anspruch 1, **dadurch gekennzeichnet, dass** der vorgegebene Winkelbereich Anstellwinkel einschießt, bei welchen ein Rotorblatt (10, 40, 41) negativen Auftrieb erzeugt (α < 0°).

3. Fluggerät nach Anspruch 2, **dadurch gekennzeichnet, dass** der vorgegebene Winkelbereich Anstellwinkel zwischen -5° und +10° einschließt.

4. Fluggerät nach Anspruch 3, **dadurch gekennzeichnet, dass** der vorgegebene Winkelbereich Anstellwinkel zwischen -12° und +12° einschließt.

5. Fluggerät nach einem der vorangehenden Ansprüche, **dadurch gekennzeichnet, dass** die Rotoren (31, 32, 101, 102) einen Radius von wenigstens 1m aufweisen.

6. Fluggerät nach Anspruch 5, **dadurch gekennzeichnet, dass** die Rotoren (31, 32, 101, 102) einen Radius von wenigstens 2m aufweisen.

7. Fluggerät nach einem der vorangehenden Ansprüche, **dadurch gekennzeichnet, dass** die Antriebseinheiten (5, 6, 7, 8, 21, 22, 23, 24, 25, 26, 27, 28, 30) jeweils einen Mantelring (11, 35) aufweisen.

8. Fluggerät nach einem der vorangehenden Ansprüche, **dadurch gekennzeichnet, dass** die Rotorblätter (10, 40, 41) eine Schränkung von maximal 5° aufweisen.

9. Fluggerät nach einem der vorangehenden Ansprüche, **dadurch gekennzeichnet, dass** jede Antriebseinheit (30) zwei koaxiale Rotoren (31, 32, 101, 102) mit gegenläufiger Drehrichtung aufweist.

10. Fluggerät nach einem der vorangehenden Ansprüche, **dadurch gekennzeichnet, dass** Drehzahl und Anstellwinkel der Rotorblätter (10, 40, 41) für jede Antriebseinheit (5, 6, 7, 8, 21, 22, 23, 24, 25, 26, 27, 28, 30) separat steuerbar sind.

## Claims

1. Aircraft comprising a nacelle (2, 151), at least three propulsion units (5, 6, 7, 8, 21, 22, 23, 24, 25, 26, 27, 28, 30) arranged around the nacelle (2) in such a way that they span an area, and a central control system (160); wherein
each propulsion unit (5, 6, 7, 8, 21, 22, 23, 24, 25, 26, 27, 28, 30) comprises at least one rotor (31, 32, 101, 102) with an axis of rotation that is essentially perpendicular to the surface spanned by the drive units (5, 6, 7, 8, 21, 22, 23, 24, 25, 26, 27, 28, 30), and wherein
each rotor (31, 32, 101, 102) has at least two, preferably at least three rotor blades (10, 40, 41), the angle of attack α of which can be adjusted during operation within a predetermined angle range,
wherein the predetermined angle range includes an angle of attack at which a rotor blade (10, 40, 41) generates no lift (α = 0°) regardless of the rotational speed of the rotor (31, 32, 101, 102) (α = 0°); and
wherein each propulsion unit is constructed as an independent propulsion module (100, 152, 153, 154, 155, 156, 157) comprising:
- at least one drive motor (103, 105) for the at least one rotor (31, 32, 101, 102),
- at least one servomotor (104, 106) for adjusting the angle of attack of the rotor blades (10, 40, 41),
- a module controller (110) for the at least one drive motor (103, 105) and the at least one servo motor (104, 106), and
- a data interface (111) for communication between the module controller (110) and the central controller (160);
**characterized in that** the central control system is configured to generate setpoints for the lift to be provided by the propulsion modules (100, 152, 153, 154, 155, 156, 157) from predetermined course parameters and data from flight attitude sensors (112, 113, 114, 162, 163, 164) and to transmit them to the drive modules (100, 152, 153, 154, 155, 156, 157) via the data interface, and
wherein the module controller (110) is configured to control the drive motors (103, 105) and the servomotors (104, 106) as a function of the setpoints for the lift forces and torques to be delivered by the drive module (100, 152, 153, 154, 155, 156, 157).

2. Aircraft according to claim 1, **characterized in that** the predetermined angle range includes angles of attack at which a rotor blade (10, 40, 41) generates negative lift (α < 0°).

3. Aircraft according to claim 2, **characterized in that** the predetermined angle range includes angles of attack between -5° and +10°.

4. Aircraft according to claim 3, **characterized in that** the predetermined angle range includes angles of attack between -12° and +12°.

5. Aircraft according to one of the preceding claims, **characterized in that** the rotors (31, 32, 101, 102) have a radius of at least 1 m.

6. Aircraft according to claim 5, **characterized in that** the rotors (31, 32, 101, 102) have a radius of at least 2 m.

7. Aircraft according to one of the preceding claims, **characterized in that** the propulsion units (5, 6, 7, 8, 21, 22, 23, 24, 25, 26, 27, 28, 30) each have a jacket ring (11, 35).

8. Aircraft according to one of the preceding claims, **characterized in that** the rotor blades (10, 40, 41) have a maximum skew of 5°.

9. Aircraft according to one of the preceding claims, **characterized in that** each propulsion unit (30) has two coaxial rotors (31, 32, 101, 102) with opposite directions of rotation.

10. Aircraft according to one of the preceding claims, **characterized in that** the rotational speed and angle of attack of the rotor blades (10, 40, 41) for each propulsion unit (5, 6, 7, 8, 21, 22, 23, 24, 25, 26, 27, 28, 30) are separately controlled.

## Revendications

1. Aéronef comprenant une nacelle (2, 151), au moins trois unités de propulsion (5, 6, 7, 8, 21, 22, 23, 24, 25, 26, 27, 28, 30) qui sont disposées autour de la nacelle (2) de manière à former une surface, et une commande centrale (160);
chaque unité de propulsion (5, 6, 7, 8, 21, 22, 23, 24, 25, 26, 27, 28, 30) comprenant au moins un rotor (31, 32, 101, 102) avec un axe de rotation qui s'étend essentiellement perpendiculairement à la surface formée par les unités de propulsion (5, 6, 7, 8, 21, 22, 23, 24, 25, 26, 27, 28, 30), et
dans lequel chaque rotor (31, 32, 101, 102) comporte au moins deux, de préférence au moins trois pales de rotor (10, 40, 41) dont l'angle d'attaque α est réglable en service dans une plage angulaire prédéfinie,
la plage angulaire prédéfinie comprenant un angle d'attaque auquel une pale de rotor (10, 40, 41) ne génère aucune portance (α = 0°) indépendamment de la vitesse de rotation du rotor (31, 32, 101, 102) (α = 0°) ; et
chaque unité de propulsion est conçue comme un module de propulsion autonome (100, 152, 153, 154, 155, 156, 157) qui comprend:
- au moins un moteur d'entraînement (103, 105) pour le ou les rotors (31, 32, 101, 102),
- au moins un servomoteur (104, 106) pour le réglage de l'angle d'attaque des pales du rotor (10, 40, 41),
- une commande de module (110) pour le au moins un moteur d'entraînement (103, 105) et le au moins un servomoteur (104, 106), et
- une interface de données (111) pour la communication entre la commande de module (110) et la commande centrale (160) ;
**caractérisé en ce que** la commande centrale est configurée pour déterminer, à partir de paramètres de cap prédéfinis et de données provenant de capteurs de position de vol (112, 113, 114, 162, 163, 164) pour les forces de portance et les couples à fournir par les modules de propulsion (100, 152, 153, 154, 155, 156, 157) et de les transmettre aux modules de propulsion (100, 152, 153, 154, 155, 156, 157) via l'interface de données, et
la commande de module (110) est conçue pour commander les moteurs d'entraînement (103, 105) et les servomoteurs (104, 106) en fonction des valeurs de consigne pour les forces de portance et les couples à fournir par le module d'entraînement (100, 152, 153, 154, 155, 156, 157).

2. Aéronef selon la revendication 1, **caractérisé en ce que** la plage angulaire prédéfinie comprend des angles d'attaque pour lesquels une pale de rotor (10, 40, 41) génère une portance négative (α < 0°).

3. Aéronef selon la revendication 2, **caractérisé en ce que** la plage angulaire prédéfinie comprend des angles d'attaque compris entre -5° et +10°.

4. Aéronef selon la revendication 3, **caractérisé en ce que** la plage angulaire prédéfinie comprend des angles d'attaque compris entre -12° et +12°.

5. Aéronef selon l'une des revendications précédentes, **caractérisé en ce que** les rotors (31, 32, 101, 102) ont un rayon d'au moins 1 m.

6. Aéronef selon la revendication 5, **caractérisé en ce que** les rotors (31, 32, 101, 102) ont un rayon d'au moins 2 m.

7. Aéronef selon l'une des revendications précédentes, **caractérisé en ce que** les unités de propulsion (5, 6, 7, 8, 21, 22, 23, 24, 25, 26, 27, 28, 30) présentent chacune une bague d'enveloppe (11, 35).

8. Appareil volant selon l'une des revendications précédentes, **caractérisé en ce que** les pales de rotor (10, 40, 41) présentent un carénage maximal de 5°.

9. Aéronef selon l'une des revendications précédentes, **caractérisé en ce que** chaque unité d'entraînement (30) comporte deux rotors coaxiaux (31, 32, 101, 102) à sens de rotation opposé.

10. Aéronef selon l'une des revendications précédentes, **caractérisé en ce que** la vitesse de rotation et l'angle d'attaque des pales de rotor (10, 40, 41) peuvent être commandés séparément pour chaque unité de propulsion (5, 6, 7, 8, 21, 22, 23, 24, 25, 26, 27, 28, 30).
